# EUROPEAN PATENT APPLICATION

(11) **EP 1 839 737 A1**
(43) Date of publication of application: **03.10.2007**
(21) Application number: 05820129.4
(22) Date of filing: 21.12.2005
(51) Int. Cl.: B01J 8/42, B01J 2/16

(54) **FLUIDIZED BED DEVICE**

(30) Priority: 21.12.2004 JP 2004368955
(71) Applicant: Eisai R&D Management Co., Ltd., Tokyo 112-8088 (JP)
(72) Inventor: ZAIMA, Yasuhiro, Kawashima Industrial Complex, Kakamigahara-shi, Gifu 501-6195 (JP)
(74) Representative: HOFFMANN EITLE
(86) International application number: PCT/JP2005/023454
(87) International publication number: WO 2006/068165

(57) **Abstract**

The present invention provides a fluidized bed device for handling fine particles as a fluidized bed in a medicine manufacturing process, a cosmetic manufacturing process, a food manufacturing process, a chemical manufacturing process and the like, wherein influence of static electricity is suppressed, and a method for neutralizing the static electricity using that device. The fluidized bed device includes an X-ray irradiation unit for irradiating fine particles in the fluidized bed device with X-rays.

## Description

### Technical Field

The present invention relates to a fluidized bed device and a method of neutralizing static electricity from fine particles and the like, which can perform coating, granulating, mixing, drying and the like of fine particles such as granules or powder of a medicine, a food and the like without being influenced by static electricity.

### Background Art

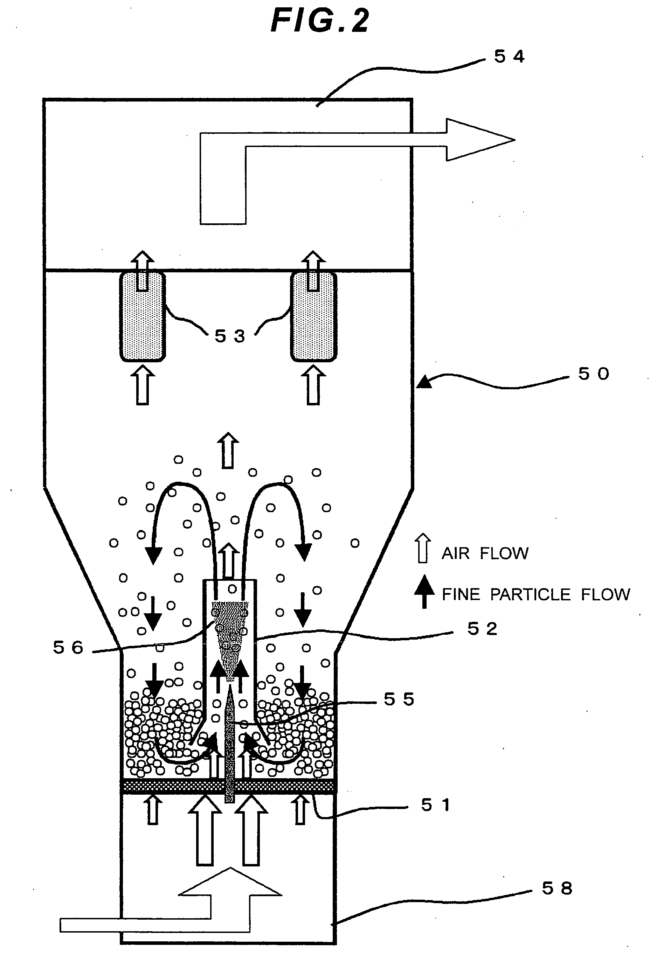

A fluidized bed device is often used in coating, granulating, mixing and drying of fine particles such as powder, granules and the like. Examples of the fluidized bed device include a Wurster type coating device disclosed in, for example, Japanese Patent Application Laid-Open Publication No. 2003-1090 A. A constitution in a general Wurster type coating device will be described with reference to FIG. 2. A cylindrical draft tube 52 is disposed above a bottom surface 51 in a fluidizing tank 50, and an air supply unit 58 is disposed under the bottom surface 51. Air blown from the air supply unit 58 is introduced into the draft tube 52 through a large number of air supply holes disposed in the bottom surface 51, and pass through the draft tube 52. Subsequently, the air is discharged to an exhaust unit 54 through bug filters 53 arranged in an upper part of the fluidizing tank 50. Moreover, a spray gun 55 is disposed on the center of the bottom surface 51 toward the inside of the draft tube 52. Fine particles contained in the fluidizing tank 50 are introduced into the draft tube 52 by the air blown through the air supply holes. The surfaces of the fine particles introduced into the draft tube 52 are coated with a sprayed liquid 56 such as a coating liquid jetted from the spray gun 55. The coated fine particles are blown up above the draft tube 52 with the air, stall and then drop externally of the draft tube 52. Subsequently, fine particle groups which have dropped are again introduced into the draft tube 52.

It is known that in the fluidized bed device, static electricity is easily generated owing to friction of the fine particles and the like in the fluidized bed device. The fine particles easily adheres to the wall surface of the fluidizing tank, the outer wall surface of the draft tube, and the surfaces of the bug filters based on the generation of the static electricity. Especially, when the surfaces of the fine particles are coated with an enteric material or the like having a very high charging property, fluidization of the fine particles itself is hampered by a large amount of adhered matters, and the fine particles are not fluidized at all in some case. Troubles such as adhered, aggregating and bridging of the fine particles due to the static electricity are large obstacles in securing uniformity of products, stably and efficiently performing a manufacturing process, and achieving automation of the manufacturing process. As a method of eliminating this electrostatic trouble (a static electricity neutralizing method), humidifying of a manufacturing area or a manufacturing device has heretofore been used most generally. In this method, a relative humidity can be kept at 55 to 60% or more to thereby inhibit the electrostatic trouble. As a general method of neutralizing the static electricity, a static electricity neutralizing method by corona discharge is known.

### Disclosure of the Invention

### Problem to be solved by the Invention

However, there has been a problem that a method performed by humidification cannot be applied to a chemical having a high moisture-absorption property and a chemical having decomposition promoted by moisture. In recent years, there has been a growing interest in contamination of a medicine by microorganisms, and humidification of a manufacturing area also has a large demerit from viewpoints of the contamination in a product by germs during manufacturing and multiplication of the microorganisms due to an increase of a moisture ratio in a product during storage of the product. Furthermore, during the humidification, since coated fine particles have a large moisture content, the subsequent drying step requires excessive time. This is also disadvantageous in respect of cost. In such a situation, there is a strong demand for a method other than the humidification in order to prevent an electrostatic trouble of a medicine manufacturing process.

Also, the corona discharge type static electricity neutralizing unit does not have a sufficient static electricity neutralizing effect in the medicine manufacturing process, especially a step of handling the fine particles. In the corona discharge type static electricity neutralizing unit, electrodes are exposed, and there is a demerit that it is difficult to use the neutralizing unit in a step of fluidizing powder dust and a step of using an organic solvent from a viewpoint of an explosive property. There is also a problem that the fine particles stick to the electrodes, and the static electricity neutralizing effect decays.

An object of the present invention is to provide a method for preventing electrostatic trouble, the method is also applicable to a chemical having a high moisture-absorption property and a compound vulnerable to moisture in the medicine manufacturing process and the like, and the method is also usable in a step of using the organic solvent having the large explosive property without involving any risk of contamination by microorganism.

### Means for solving the Problem

A fluidized bed device of the present invention comprises an X-ray irradiation unit which irradiates fine particles to be treated in the fluidized bed vessel with X-rays. According to this constitution, since the fine particles irradiated with the X-rays exhibit a static electricity neutralizing effect, an electrostatic trouble can be prevented.

The fine particles to be treated by the fluidized bed device of the present invention are fine particles which easily generate static electricity regardless of types of the particles, and which are the fine particles of, for example, a medicine, a cosmetic, a food, a chemical and the like. Particle diameters of the fine particles are in a range of 10 to 1600 µm, preferably 20 to 1500 µm, more preferably 40 to 1400 µm.

The X-ray for use in the present invention is not restricted by energy (wavelength) of the ray as long as the ray has the static electricity neutralizing effect, but it is preferable to use soft X-rays as the X-rays. The soft X-rays are weak X-rays of about 3 to 9.5 keV. As a unit (a soft X-ray irradiation unit) which generates the soft X-rays, a unit on the market may be used, and examples of the unit include a photo ionizer (manufactured by Hamamatsu Photonics K.K.).

Preferably, the fluidized bed device further includes an air supply unit for introducing air into the fluidized bed vessel to cause the fine particles to float with this air, and the X-ray irradiation unit irradiates the fine floating particles in the fluidized bed vessel with the X-rays.

Preferably, the X-ray irradiation unit is disposed at a position deviating from a route along which the floating fine particles are fluidized in the fluidized bed vessel.

More preferably, the air supply unit introduces the air from below the fluidized bed vessel, and the X-ray irradiation unit irradiates the floating fine particles with the X-rays from at least one of an upper part and a side part with respect to the fine particles.

Preferably, the fluidized bed device further includes a cylindrical draft tube which is disposed in the fluidized bed vessel and through which the air and the fine particles pass upwards, and an irradiating region of the X-rays by the X-ray irradiation unit is present in a space above the draft tube.

Preferably, an irradiation port of the X-ray irradiation unit is 300 to 2000 mm away from an upper end of the draft tube.

Preferably, the fluidized bed device further includes a spray gun for spraying a spray liquid in the draft tube.

More preferably, a spray port of the spray gun is positioned in the draft tube, and the spray gun sprays the spray liquid upwards from the spray port.

Preferably, the fluidized bed device further includes a controller for cooperatively controlling the air supply unit, the X-ray irradiation unit and the spray gun.

Preferably, the fluidized bed device is one of a Wurster type coating device, a fluidized bed type coating device, a fluidized bet with agitator type coating device, a centrifugal fluidized bet type coating device and a vibrro-fluidized bet type coating device. More preferably, the fluidized bed device is the Wurster type coating device.

Moreover, according to further aspects, the present invention can be described as follows.

That is, another fluidized bed device of the present invention includes a static electricity neutralizing unit disposed in a fluidized bed vessel for neutralizing static electricity generated by fine particles to be treated in the fluidized bed vessel.

A method of handling fine particles according to the present invention includes irradiating the fine particles blown up in a fluidized bed vessel of a fluidized bed device with X-rays.

A method of neutralizing static electricity from fine particles according to the present invention includes irradiating the fine particles blown up in a fluidized bed vessel of a fluidized bed device with X-rays:

A coating and granulating method of fine particles according to the present invention includes irradiating the fine particles blown up in a fluidized bed vessel of a fluidized bed device with X-rays.

The fluidized bed device of the present invention is a fluidized bed device which treats fine particles as a fluidized bed in a medicine manufacturing process, a cosmetic manufacturing process, a food manufacturing process, a chemical manufacturing process and the like, and which includes a soft X-ray irradiation unit for irradiating the fine particles blown up by air with soft X-rays. In the fluidized bed device which treats the fine particles, the present invention includes directly or indirectly irradiating the fine particles with the soft X-rays, and irradiating the fine particles through a film made of a resin to thereby prevent a trouble caused by charging as described above.

### Effect of the Invention

This method has a static electricity neutralizing effect even under an environment at a low humidity, and is also applicable to a chemical having a high moisture-absorption property and a chemical vulnerable to moisture. Since the method exhibits a static electricity neutralizing power even on conditions at a low humidity and a high temperature, the method is advantageous from a viewpoint of prevention of contamination with microorganisms.

On the other hand, in the soft X-ray irradiation unit, unlike a corona discharge type static electricity neutralizing unit, electrodes are not exposed. Therefore, the unit is very advantageous from a viewpoint of prevention of explosion. In addition, since the fine particles can be irradiated through a film made of a resin or the like, the unit can completely be separated from an explosive environment.

As described above, since characteristics of the soft X-rays are utilized, it is possible to prevent various electrostatic troubles which could not be prevented by a conventional method in a medicine manufacturing process or an electrostatic trouble to which the conventional method could not be applied.

### Best Mode for Carrying out the Invention

The best mode for carrying out the present invention will hereinafter be described.

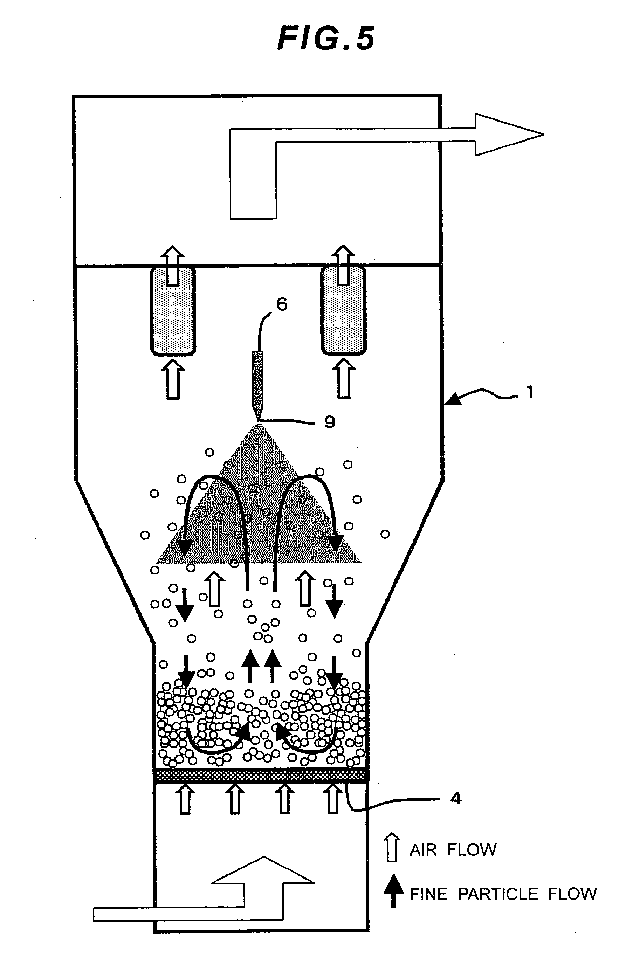

There is not any restriction on a type of a fluidized bed device of the present invention as long as the fluidized bed device blows up fine particles (powder, granules, etc.) in the fluidized bed device by use of air jetted upwards from a formed mesh-like fluidizing tank bottom surface 4 to thereby fluidize the fine particles and perform coating, granulating and the like as shown in, for example, FIG. 5. In addition to a general fluidized bed type coating device which sprays a coating liquid downwards from a spray gun 6 disposed above a fluidized bed as shown in FIG. 5, the fluidized bed device is classified into a Wurster type coating device having a draft tube in a fluidizing tank and being configured to spray the particles in the draft tube; a fluidized bet with agitator type coating device having a stirring blade on the bottom surface of the fluidizing tank; a centrifugal fluidized bet type coating device in which the bottom surface of the fluidizing tank rotates; a vibrro-fluidized bet type coating device in which the bottom surface of the fluidizing tank is vibrated by a vibrator and the like. However, there is not any special restriction on the fluidized bed device as long as the device treats the fine particles in the form of the fluidized bed.

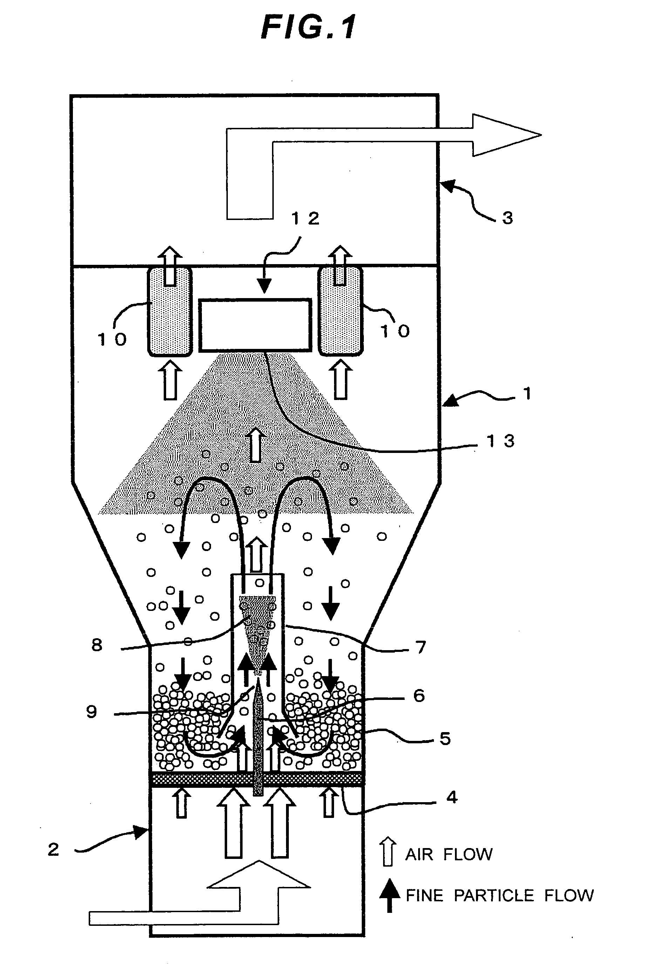

Here, the Wurster type coating device will be described as an example. FIG. 1 is an explanatory view showing one example of the fluidized bed device (the Wurster type coating device) of the present invention. The fluidized bed device shown in FIG. 1 includes a fluidizing tank (a fluidized bed vessel) 1 for performing coating, granulating and the like; an air supply unit 2 disposed below the fluidizing tank 1 for supplying air into the fluidizing tank; and an exhaust unit 3 disposed above the fluidizing tank for discharging air from the fluidizing tank.

Air conditioned to a predetermined temperature and humidity passes through the air supply unit 2 from a blower (not shown), and is supplied into the fluidizing tank 1. Air is usually used, however, for a chemical vulnerable to a chemical change such as oxidation, an inactive gas such as air containing reduced oxygen, nitrogen or helium may be used. That is, the blower (not shown) and the air supply unit 2 constitute an air supply device which introduces the air into the fluidizing tank 1. The air during usual coating has a temperature of about 10 to 90°C and a humidity of about 5 to 95%.

The fluidizing tank 1 includes a circular fluidizing tank bottom surface 4 having a large number of air supply holes; and a fluidizing tank side wall 5 extending upwards from the peripheral edge of the fluidizing tank bottom surface 4 and disposed to reach the exhaust unit 3. The fluidizing tank side wall 5 shown in FIG. 1 has a cylindrical shape at a lower part, a conical shape at an intermediate part and a cylindrical shape at an upper part. However, the whole shape of the fluidizing tank side wall 5 may be a cylindrical shape or a conical shape, the upper part may have a cylindrical shape, and the lower part may have a conical shape. There is not any special restriction on a size of the fluidizing tank, but the size is usually about 100 φ × 500 H to 3000 φ × 8000 H (mm), preferably 200 φ × 1000 H to 2500 φ × 7000 H (mm), more preferably 300 φ × 1500 H (mm) to 2000 φ × 6000 H (mm).

The fluidizing tank bottom surface 4 is provided with a large number of air supply holes for introducing the air supplied from the air supply unit 2 into the fluidizing tank 1. Substantially at the center of the side surface of the fluidizing tank, a spray gun installation hole is disposed through which a spray gun 6 described later is passed. A cylindrical draft tube 7 is disposed above substantially the center of the fluidizing tank bottom surface 4. The air supply holes of the fluidizing tank bottom surface 4 are arranged so that more holes are distributed under the draft tube 7. The air blown from the air supply unit 2 passes through the air supply holes, and is preferentially introduced into the draft tube 7 through the air supply holes. There is not any restriction on a size of this air supply holes, but the size is usually about 90 to 2900 mmφ, preferably 180 to 2400 mmφ, further preferably 270 to 1800 mmφ. The draft tube 7 is cylindrical. In a space of the tube, a spray zone 8 for coating the fine particles with the coating liquid is formed. An upper part of the draft tube shown in FIG. 1 has a circular cylindrical shape, and a lower part thereof has a conical shape so that a lower end opening enlarges. There is not any restriction on a shape of the draft tube 7 as long as the draft tube is cylindrical, and the whole shape may be circular cylindrical or conical. The fine particles, with which the fluidizing tank 1 is filled get on the air supplied from the air supply unit 2, are introduced into the draft tube from the lower-end opening of the draft tube 7, then blown up above the draft tube 7 and brought into a floating state. The fine particles brought into the floating state then stall and drop externally from the draft tube 7. Subsequently, the particles are again introduced into the draft tube 7 and further coated. As described above, the fine particles in the fluidizing tank 1 are circulated by the air supplied by the air supply device. A circulation channel through which the floating fine particles are fluidized is mainly constituted of an inner space of the draft tube 7, an upper space of the draft tube 7 and a side space between an outer peripheral surface of the draft tube 7 and an inner wall surface of the fluidizing tank side wall 5. Moreover, a soft X-ray irradiation unit 12 described later is disposed at a position which deviates from this circulation channel so that the rising and dropping fine particles do not remain in the unit.

The spray gun 6 is disposed through a spray gun installation hole substantially at the center of the fluidizing tank bottom surface 4. The spray gun 6 is connected to a coating liquid supply tube and a spray air supply tube (not shown). The coating liquid supplied to the spray gun is sprayed upwards together with the sprayed air from a spray port 9 formed at an upper end of the spray gun. The spray gun 6 is disposed so that the spray port 9 at the upper end of the gun is positioned in the draft tube 7 (the spray zone 8). The surfaces of the fine particles introduced into the draft tube are coated with the coating liquid while the particles pass through the spray zone 8.

Bug filters 10 are arranged in an upper part of the fluidizing tank 1. The bug filters 10 separate the fine particles from the air to discharge the air only to the exhaust unit 3. As a material of the bug filter 10, polyester, aramid, polyimide, polypropylene, polyphenylene sulfide, polytetrafluoroethyene or the like is used. There is not any restriction on the number of the bug filters to be installed, and the number can be changed in accordance with a size of the fluidizing tank, a size of the bug filter and the like. The air supplied into the fluidizing tank passes through the bug filters 10, is discharged to the exhaust unit 3 present above the fluidizing tank 1 and then discharged from the fluidized bed device.

In the fluidized bed device shown in FIG. 1, the soft X-ray irradiation unit 12 is attached above the draft tube 7, with an irradiation port 13 directed downwards. There is not any restriction on a position where the soft X-ray irradiation unit 12 is attached as long as soft X-rays emitted from the unit sufficiently reaches a fine particles group blown up from the draft tube 7. The position of the irradiation port 13 of the soft X-ray irradiation unit may be, for example, a position as high as the lower end of the bug filter, a position higher than the lower end of the bug filter or a position lower than the lower end of the bug filter. As means for attaching the soft X-ray irradiation unit 12, the soft X-ray irradiation unit may be attached to the bug filter 10 directly or via an appropriate attachment member, or may be attached to the bottom surface of the exhaust unit 3. Since the X-rays emitted from the soft X-ray irradiation unit usually reaches a distance of about 1000 mm from the irradiation port 13, the unit may be disposed so that the irradiation port 13 is positioned at about 2000 to 300 mm, preferably about 1500 to 500 mm, most preferably about 1000 mm above the upper end of the draft tube.

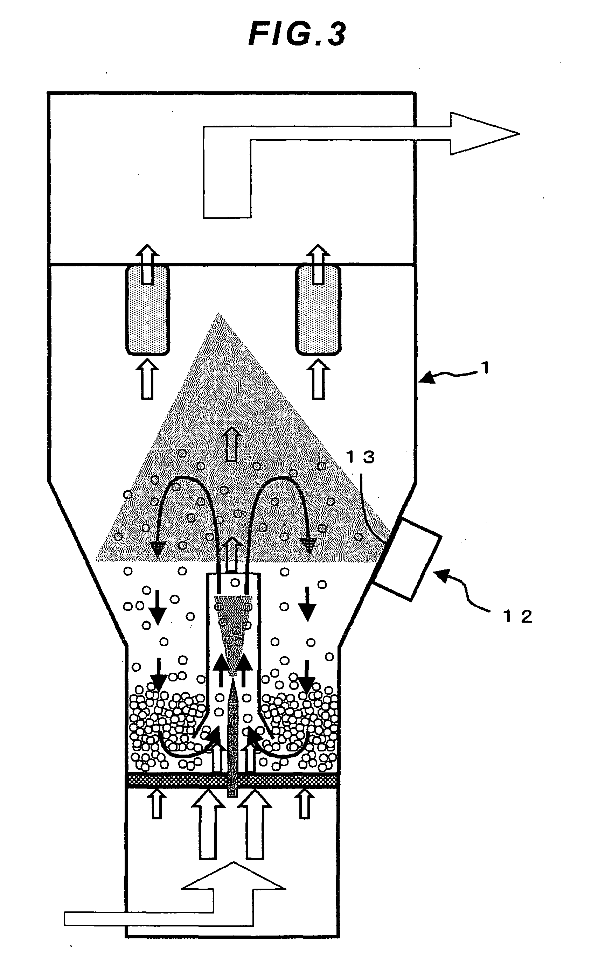

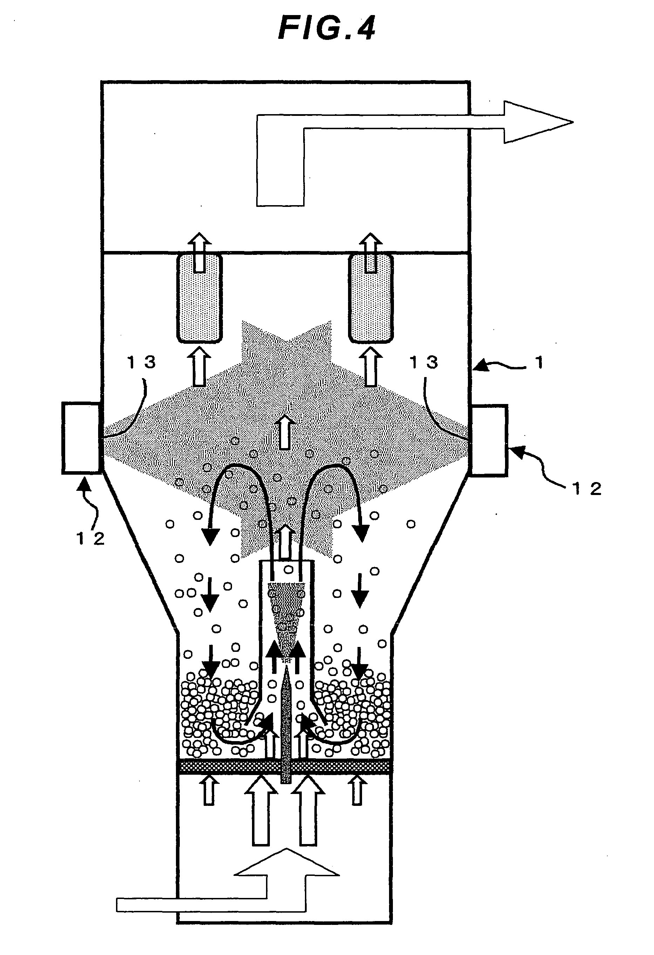

Moreover, since the soft X-rays have a very weak penetrating power, the X-rays do not effectively function in a region where the fine particle group has a large density (in the vicinity of the bottom surface of the fluidizing tank). Therefore, the soft X-ray irradiation unit needs to be installed so that the soft X-rays can irradiate a region where the fine particle group has a small density and the fine particles are blown up (a region where the fine particles are blown up and floating). As long as the region where the fine particle group has a small density can be irradiated, there is not any restriction on a position where the soft X-ray irradiation unit 12 is installed, and the soft X-ray irradiation unit may be installed, for example, on the fluidizing tank side wall 5 as shown in FIG. 3, instead of the position above the draft tube 7. When the soft X-ray irradiation unit 12 is disposed on the fluidizing tank side wall 5, for example, an attachment hole may be disposed at the fluidizing tank side wall 5, and the irradiation port 13 may be attached to the attachment hole so that the irradiation port 13 is directed inwards in the fluidizing tank 1. The soft X-rays have a property of penetrating a resin such as polyethylene terephthalate (PET), polyimide or amorphous carbon. Therefore, the resin which passes the soft X-rays is fitted into the attachment hole, and the soft X-ray irradiation unit may be disposed externally from the hole. One soft X-ray irradiation unit may be disposed, or a plurality of X-ray irradiation units may be arranged as shown in FIG. 4. Although not shown, a device window may be attached to the fluidizing tank side wall 5 of the fluidized bed device so that the inside of the device can be observed. For example, the soft X-ray irradiation unit 12, the floating state of the fine particles, a fluidized state and the like may visually be checked.

The exhaust unit 3 is disposed above the fluidizing tank 1, and the inside of the exhaust unit 3 is connected to the inside of the fluidizing tank 1 through the bug filters 10. The air blown into the fluidizing tank 1 is discharged to the exhaust unit 3 through the bug filters 10, and then discharged from the fluidized bed device. It is preferable that a dust collecting unit having an airflow control function is used as the exhaust unit, in order to keep the inside of the fluidizing tank at a certain pressure.

Although omitted from the drawing, a controller is disposed which overall controls the fluidized bed device. The controller cooperatively controls the air supply device (the air supply unit 2), the exhaust unit 3, the soft X-ray irradiation unit 12, the spray gun 6 and the like. For example, during driving of the air supply device, the exhaust unit 3 and the spray gun 6, the soft X-ray irradiation unit 12 may periodically emit the soft X-rays, or constantly emit the soft X-rays. The controller may start driving the soft X-ray irradiation unit 12 prior to starting of the driving of the air supply device. In this case, an irradiation region can be a region where the static electricity can be neutralized before the fine particles are blown up, and a static electricity neutralizing effect can be improved.

### Test Examples

A static electricity neutralizing effect comparison test, a static electricity neutralizing effect confirmation test and a powder dust explosion test were performed using a soft X-ray irradiation unit for use in the present invention.

### Static Electricity Neutralizing Effect Comparison Test

A test was performed using a system to generate static electricity owing to frictions of fine particles easily charged with the static electricity in order to check whether or not the static electricity could be neutralized by use of various static electricity neutralizing units ((1) an alternate-current corona discharge type static electricity neutralizing unit, (2) a direct-current corona discharge type static electricity neutralizing unit and (3) a soft X-ray irradiation unit) in the system.
1. A bag (200 × 300 × 0.08 mm) made of polyethylene was filled with 10 g of fine particles (particle diameters: about 470 µm) coated with an enteric film coating and easily charged with the static electricity.
2. The bag filled with the fine particles was rapidly vibrated vertically and mixed for about 30 seconds, and adhering states of granules to the polyethylene bag due to the generated static electricity were observed. As a result, it was confirmed that a large amount of particles were adhered to the whole surface of the polyethylene bag.
3. Evaluations were performed in the same manner as in the above 1 and 2 under ventilation of ionizing air by (1) the alternate-current corona discharge type static electricity neutralizing unit (Ion Blower 5802, manufactured by Ion Systems, Inc.), under the ventilation of the ionizing air by (2) the direct-current corona discharge type static electricity neutralizing unit (an air gun type static electricity neutralizing unit, TAS-20G manufactured by TRINC, Inc.) and in a state in which the soft X-rays were emitted by (3) the soft X-ray irradiation unit (Photo Ionizer L9490 manufactured by Hamamatsu Photonics K.K.).

Results are shown in Table 1.

**Table 1**

| Conditions | No static electricity neutralization | irradiation with soft X-rays | Blown air for static electricity neutralization (alternate-current corona discharge) | Air blown from ion gun (direct-current corona discharge) |
|---|---|---|---|---|
| Adherence of granules | Entirely adhered | Locally adhered | Entirely adhered | Entirely adhered |
| Static electricity neutralizing effect | - | Present | None | Present only |

As shown in Table 1, (1) reduction of an amount of adhered granules in the alternate-current corona discharge type static electricity neutralizing unit was not confirmed. (2) In the direct-current corona discharge type static electricity neutralizing unit, a slight static electricity neutralizing effect was confirmed, but a large amount of the granules were adsorbed by electrodes several seconds after the static electricity neutralization was started, and the static electricity neutralizing effect was lost. (3) The reduction of the amount of the attached granules was confirmed in an only case where the soft X-rays were emitted.

### Static Electricity neutralizing Effect Confirmation Test

A bag (100 × 200 × 0.08 mm) made of polyethylene was loaded with 2.5 g of fine particles (particle diameter: about 470 µm) coated with an enteric film coating, and rapidly vibrated for about 30 seconds, and granules were electrostatically attached to the polyethylene bag. Next, the polyethylene bag was turned upside down to take out the granules (natural dropping). An amount of the granules taken out was subtracted from an amount of the granules introduced, and an amount of the granules adhered to the polyethylene bag due to the static electricity was calculated.

The above investigation was performed during irradiation with soft X-rays and during non-irradiation. It is to be noted that as a soft X-ray irradiation unit, Photo Ionizer L9490 (manufactured by Hamamatsu Photonics K.K.) was used. Results are shown in Table 2.

**Table 2**

| Presence or non-presence of irradiation with soft X-ray | None | Present |
|---|---|---|
| Amount of adhered granules (adhering ratio %) | 2.16g (86.6%) | 0.84g (33.5%) |
| | 2.05g (81.9%) | 0.84g (33.5%) |
| | 2.19g (87.8%) | 0.60g (23.6%) |
| Average | 2.14g (85.4%) | 0.76g (30.2%) |
| Standard deviation | 0.07g (3.1 %) | 0.14g (5.7%) |

As apparent from Table 2, when the bag was irradiated with the soft X-rays, the amount of the adhered granules remarkably decreased, and an effect of neutralizing the static electricity from the fine particles due to the soft X-rays was confirmed. While the granules were adhered to the polyethylene bag, the bag was externally irradiated with the soft X-rays. In this state, the polyethylene bag was lightly vibrated while an opening of the bag was turned downwards, and all the granules were then discharged.

### Powder Dust Explosion Test

A test was performed to check whether or not powder dust explosion was caused at a time when various static electricity neutralizing units ((1) an alternate-current corona discharge type static electricity neutralizing unit, (2) a direct-current corona discharge type static electricity neutralizing unit and (3) a soft X-ray irradiation unit) were disposed and operated in a system where the powder dust explosion was easily caused.

In a dispersing portion of a Hartmann type explosion tube, 500 mg of fine particles (lycopodium) were set, and the fine particles were blown up with compressed air. In this state, electrodes were sparked, or the fine particles were irradiated with soft X-rays, and an explosive property was evaluated. As a result, powder dust explosion was caused by the electrode spark, but any explosion was not caused by the irradiation with the soft X-rays.

On the other hand, fine particles (particle diameter: about 470 µm) coated with an enteric film coating were rapidly vibrated and electrostatically charged in a bag made of polyethylene for about 30 seconds. Subsequently, 1 g of the charged fine particles were set in the dispersing portion, and further the tube was filled with a propane gas. In this state, the electrodes were sparked, or the fine particles were irradiated with the soft X-rays, and the explosive property was evaluated. As a result, the powder dust explosion was caused by the electrode spark, but any explosion was not caused by the irradiation with the soft X-rays.

Moreover, the fine particles (particle diameters: about 470 µm) coated with the enteric film coating were rapidly vibrated and electrostatically charged in the bag made of polyethylene for about 30 seconds. Subsequently, 1 g of the charged fine particles were set in the dispersing portion. Furthermore, the particles wetted with 1 ml of ethanol were irradiated with the soft X-rays, and the explosive property was evaluated. As a result, the explosion due to the irradiation with the soft X-rays did not occur.

### Static Electricity Neutralizing Effect Confirmation Test in Fluidized Bed Device

Into a Wurster type coating device (Multiplex MP10 manufactured by POWREX Corporation), 300 g of various types of fine particles were introduced, and the fine particles were fluidized on various conditions for 15 minutes. An amount of the fine particles adhered to a wall surface and a fluidized state of the fine particles were confirmed. Results are shown in Table 3.

**Table 3**

| Particle name | Particle diameter (µm) | Blower temperature and humidity (°C/%RH) | Presence or non-presence of irradiation with soft X-rays | Amount of adhered particles (g) | Attachment ratio (%) |
|---|---|---|---|---|---|
| Fine particles coated with enteric film | 470 | 22/50 | Present | 0.0 | 0.0 |
| | | | None | 17.7 | 5.9 |
| | | 40/18 | Present | 0.0 | 0.0 |
| | | | None | 37.3 | 12.4 |
| | | 60/5 | Present | 0.0 | 0.0 |
| | | | None | 56.3 | 18.8 |
| Spherical mannitol | 200 | 50/10 | Present | 0.0 | 0.0 |
| | | | None | 1.3 | 0.4 |
| Ethyl cellulose | 200-300 | 50/10 | Present | 0.0 | 0.0 |
| | | | None | 11.0 | 3.7 |
| | 100-200 | | Present | 8.2 | 2.7 |
| | | | None | 87.8 | 29.3 |
| | 40-100 | | Present | 9.3 | 3.1 |
| | | | None | 29.6 | 9.9 |

As seen from Table 3, it has been confirmed that, as compared with a case where the fine particles are not irradiated with the soft X-rays, in a case where the fine particles are irradiated with the soft X-rays, adherence of the remaining fine particles is prevented or suppressed. When the fine particles having particle diameter of 200 µm or more were irradiated with the soft X-rays, the adherence could be zeroed. On the other hand, the adherence of the fine particles having particle diameters of 200 µm or less could not be zeroed, but an adherence suppression effect of particles having particle diameter of 40 µm or more was confirmed.

### Brief Description of the Drawings

FIG. 1 shows a constitution of a fluidized bed device according to the present invention;
FIG. 2 shows a constitution of a conventional fluidized bed device;
FIG. 3 shows another example of the fluidized bed device according to the present invention;
FIG. 4 shows still another example of the fluidized bed device according to the present invention; and
FIG. 5 shows a constitution of a general fluidized bed device.

## Claims

1. A fluidized bed device comprising:
an X-ray irradiation unit for irradiating fine particles to be treated in the fluidized bed vessel with X-rays.

2. The fluidized bed device according to claim 1, further comprising an air supply unit for introducing air into the fluidized bed vessel to cause the fine particles to float with the air;
wherein the X-ray irradiation unit irradiates the floating fine particles in the fluidized bed vessel with the X-rays.

3. The fluidized bed device according to claim 2, wherein the X-ray irradiation unit is disposed at a position deviating from a route along which the floating fine particles in the fluidized bed vessel are fluidized.

4. The fluidized bed device according to claim 2 or 3, wherein
the air supply unit introduces the air from below the fluidized bed vessel; and
the X-ray irradiation unit irradiates the floating fine particles with the X-rays from at least one of an upper part and a side part with respect to the fine particles.

5. The fluidized bed device according to claim 4, further comprising a cylindrical draft tube which is disposed in the fluidized bed vessel and through which the air and the fine particles pass upwards;
wherein an irradiating region of the X-rays by the X-ray irradiation unit is present in a space above the draft tube.

6. The fluidized bed device according to claim 5, wherein an irradiation port in the X-ray irradiation unit is 300 to 2000 mm away from an upper end of the draft tube.

7. The fluidized bed device according to claim 5 or 6, further comprising a spray gun for spraying a spray liquid in the draft tube.

8. The fluidized bed device according to claim 7, wherein
a spray port of the spray gun is positioned in the draft tube; and
the spray gun sprays the spray liquid upwards from the spray port.

9. The fluidized bed device according to claim 7 or 8, further comprising a controller which cooperatively controls the air supply unit, the X-ray irradiation unit, and the spray gun.

10. The fluidized bed device according to any one of claims 2 to 6, wherein the air supply unit and the X-ray irradiation unit are cooperatively controlled.

11. The fluidized bed device according to any one of claims 1 to 10, wherein the X-ray irradiation unit irradiates soft X-rays as the X-rays.

12. The fluidized bed device according to any one of claims 1 to 11, wherein said fluidized bed device is one of a Wurster type coating device, a fluidized bed type coating device, a fluidized bet with agitator type coating device, a centrifugal fluidized bet type coating device, and a vibrro-fluidized bet type coating device.

13. The fluidized bed device according to any one of claims 1 to 12, wherein said fluidized bed device is a Wurster type coating device.

14. A fluidized bed device comprising:
a static electricity neutralizing unit disposed in a fluidized bed vessel,
wherein the static electricity neutralizing unit neutralizes static electricity generated by fine particles to be treated in the fluidized bed vessel.

15. A method of handling fine particles comprising:
irradiating the fine particles blown up in a fluidized bed vessel of a fluidized bed device with X-rays.

16. A method of removing static electricity from fine particles comprising:
irradiating the fine particles blown up in a fluidized bed vessel of a fluidized bed device with X-rays.

17. A coating and granulating method of fine particles comprising:
irradiating the fine particles blown up in a fluidized bed vessel of a fluidized bed device with X-rays.
